# EUROPEAN PATENT APPLICATION

(11) **EP 4 207 907 A1**
(43) Date of publication of application: **05.07.2023**
(21) Application number: 21881952.2
(22) Date of filing: 18.10.2021
(51) Int. Cl.: H04W 72/04, H04W 36/00

(54) **ELECTRONIC DEVICE FOR USE IN WIRELESS COMMUNICATION, METHOD, AND COMPUTER-READABLE STORAGE MEDIUM**

(30) Priority: 23.10.2020 CN 202011145891
(71) Applicant: Sony Group Corporation, Minato-Ku, Tokyo, 108-0075 (JP)
(72) Inventor: LIU, Min, Beijing 100028 (CN)
(74) Representative: D Young & Co LLP
(86) International application number: PCT/CN2021/124358
(87) International publication number: WO 2022/083535

(57) **Abstract**

Provided in the present disclosure are an electronic device for use in wireless communication, a method, and a computer-readable storage medium. The electronic device comprises: a processing circuit, configured as: to determine whether a beam failure has occurred; and insofar as a beam failure is determined to have occurred, to switch a downlink band of a user equipment from a current downlink band to a specific band.

## Description

This application claims priority to Chinese Patent Application No. 202011145891.1, titled "ELECTRONIC DEVICE FOR USE IN WIRELESS COMMUNICATION, METHOD, AND COMPUTER-READABLE STORAGE MEDIUM", filed on October 23, 2020 with the China National Intellectual Property Administration, which is incorporated herein by reference in its entirety.

### FIELD

The present disclosure relates to the technical field of wireless communications, and in particular to the beam failure recovery (BFR) technology. More particularly, the present disclosure, relates to an electronic apparatus and a method for wireless communications, and a computer-readable storage medium.

### BACKGROUND

A beam forming technology is applied in communications using high frequency bands in order to expand the coverage range. Meanwhile, since a beam after beam forming is narrow and a high-frequency signal is easy to be blocked, a beam failure recovery (BFR) technology is proposed in NR. The BFR technology does not involve signaling of layer 3 (Radio Resource Control, RRC), and therefore is faster than traditional wireless link recovery.

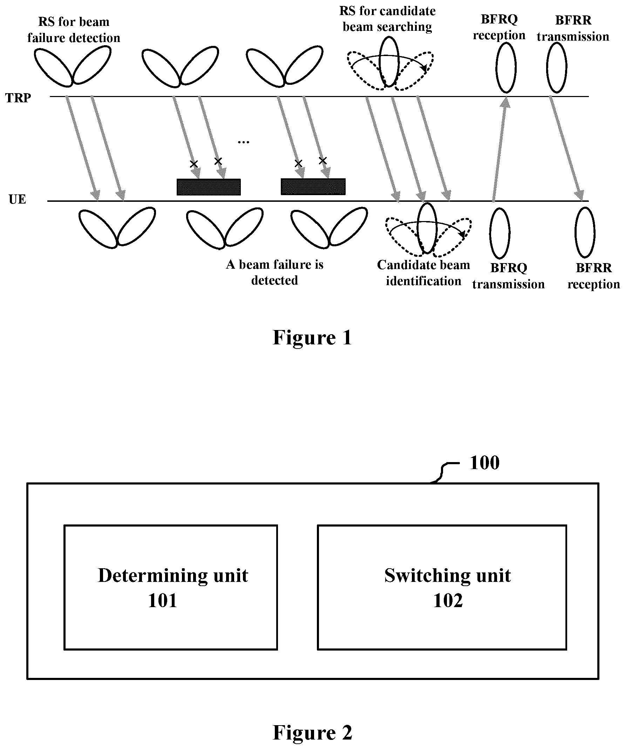

A BFR process generally includes the following operations: beam failure detection, candidate beam identification, transmission of a beam failure recovery request (BFRQ), and reception of a beam failure recovery response (BFRR), as shown in a schematic diagram in Figure 1. The user equipment (UE) performs the beam failure detection and the candidate beam identification by measuring a received reference signal (RS) such as a channel state information reference signal (CSI-RS), a synchronizing signal block (SSB). In a case that a beam failure occurs, the UE transmits a BFRQ to a base station (which is shown as a transmitting and receiving point (TRP) in Figure 1), and receives a BFRR from the TRP, thereby completing a BFR process.

In addition, a bandwidth part (BWP) mechanism is introduced in the NR to enable a rapid and dynamic adjustment of a network configuration based on a change of service, so as to adapt to the change of service and switch the UE to a BWP with a narrow frequency band properly. Thereby, energy consumption is reduced.

In NR Rel-15, an RS for beam measurement may be transmitted on any BWP, and UE can identify candidate beams without switching the BWP.

According to 38.821, in a non-terrestrial network (NTN), each satellite may generate multiple beams. At present, the NTN has two manners for corresponding between a physical cell identifier (PCI) and a beam. In a first manner, each PCI corresponds to multiple beams, and each beam corresponds to a specific SSB. In a second manner, each PCI corresponds to one beam, that is, each satellite cell corresponds to merely one beam.

In a first case, the UE in an idle state may perform resynchronization quickly and simply by simply detecting SSBs mapped to a same PCI; and for the UE in a connected state, a beam-specific SSB and a beam-specific CSI RS may be used for beam management, so as to avoid interruption of data transmission and signaling overhead due to cell handover.

In addition, in an NTN scenario, in a case that a frequency reuse factor (FRF) is equal to 1, an available bandwidth allocated to each beam is very large, but the UE may suffer serious co-channel interferences from adjacent beams. Therefore, a frequency deployment with FRF>1 may effectively reduce the interferences from adjacent beams and improve a signal to interference and noise ratio (SINR). Therefore, different beams may be located on different BWPs.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided. The electronic apparatus includes processing circuitry, which is configured to: determine whether a beam failure occurs; and in a case of determining that a beam failure occurs, switch a downlink frequency band for UE from a current downlink frequency band to a particular frequency band.

According to another aspect of the present disclosure, a method for wireless communications is provided. The method includes: determining whether a beam failure occurs; and in a case of determining that a beam failure occurs, switching a downlink frequency band for UE from a current downlink frequency band to a particular frequency band.

According to an aspect of the present disclosure, an electronic apparatus for wireless communications is provided. The electronic apparatus includes processing circuitry, which is configured to: generate configuration information of a candidate beam set for beam failure recovery, where the configuration information includes a field of an identifier of a frequency band where a candidate beam is located; and transmit the configuration information to UE, where the UE switches to the frequency band indicated by the field upon detection of a beam failure.

According to an aspect of the present disclosure, a method for wireless communications is provided. The method includes: generating configuration information of a candidate beam set for beam failure recovery, where the configuration information includes a field of an identifier of a frequency band where a candidate beam is located; and transmitting the configuration information to UE, where the UE switches to the frequency band indicated by the field upon detection of a beam failure.

With the electronic apparatus and the method according to the present disclosure, candidate beams can be quickly located in case that a beam failure occurs, and thus a fast beam failure recovery can be achieved.

According to other aspects of the present disclosure, there are further provided computer program codes and computer program products for implementing the methods for wireless communications above, and a computer-readable storage medium having recorded thereon the computer program codes for implementing the methods for wireless communications described above.

These and other advantages of the present disclosure will be more apparent from the following detailed description of preferred embodiments of the present disclosure in conjunction with the accompanying drawings.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 shows a schematic diagram of a BFR process;
Figure 2 shows a block diagram showing functional modules of an electronic apparatus for wireless communications according to an embodiment of the present disclosure;
Figure 3 shows an example in which only a particular beam is transmitted on each BWP;
Figure 4 shows a block diagram showing functional modules of an electronic apparatus for wireless communications according to an embodiment of the present disclosure;
Figure 5 shows a block diagram showing functional modules of an electronic apparatus for wireless communications according to another embodiment of the present disclosure;
Figure 6 shows a flowchart of a method for wireless communications according to an embodiment of the present disclosure;
Figure 7 shows a flowchart of a method for wireless communications according to another embodiment of the present disclosure;
Figure 8 is a block diagram showing a first example of an exemplary configuration of an eNB or gNB to which the technology of the present disclosure may be applied;
Figure 9 is a block diagram showing a second example of an exemplary configuration of an eNB or gNB to which the technology of the present disclosure may be applied;
Figure 10 is a block diagram showing an example of an exemplary configuration of a smartphone to which the technology according to the present disclosure may be applied;
Figure 11 is a block diagram showing an example of an exemplary configuration of a car navigation apparatus to which the technology according to the present disclosure may be applied; and
Figure 12 is a block diagram of an exemplary block diagram illustrating the structure of a general purpose personal computer capable of realizing the method and/or device and/or system according to the embodiments of the present disclosure.

### DETAILED DESCRIPTION

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First embodiment

As mentioned above, for example, there may be a situation in an NTN in which different beams are located on different BWPs, and therefore UE may not be able to locate a suitable candidate beam in a current BWP when a beam failure occurs. In view of this, a technology for fast beam recovery is proposed in the embodiment. It should be understood that although the problem targeted by the present disclosure is described above based on an NTN scenario, an applicable scope of the present disclosure is not limited thereto. The present disclosure may be applied to any occasion with similar requirements appropriately.

Figure 2 shows a block diagram showing functional modules of an electronic apparatus 100 for wireless communications according to an embodiment of the present disclosure. As shown in Figure 2, the electronic apparatus 100 includes a determining unit 101 and a switching unit 102. The determining unit 101 is configured to determine whether a beam failure occurs. The switching unit 102 is configured to switch a downlink frequency band for UE from a current downlink frequency band to a particular frequency band, in a case that the determining unit 101 determines that a beam failure occurs.

The determining unit 101 and the switching unit 102 may be implemented by one or more processing circuits. The processing circuits may be implemented as chips, for example. Furthermore, it should be understood that functional units in the apparatus in Figure 2 are only logical modules divided according to specific functions thereof, and are not intended to limit specific implementations.

The electronic apparatus 100 may be disposed on UE side or communicatively connected to the UE, for example. Here, it should be noted that the electronic apparatus 100 may be implemented at a chip-level, or may be implemented at an apparatus-level. For example, the electronic apparatus 100 may serve as the UE itself, and may further include external devices such as a memory, a transceiver (not shown in the figure). The memory may store programs required to be executed by the UE to realize various functions and relevant data information. The transceiver may include one or more communication interfaces to support communication with different apparatuses (such as base station, other UEs and the like). An implementation of the transceiver is not specifically limited herein.

For example, the determining unit 101 may evaluate quality of a current beam and determine whether a beam failure occurs by detecting a Block Error Rate (BLER). In a case that the determining unit 101 determines that a beam failure occurs, the switching unit 101 switches the UE from a current downlink frequency band, such as F1, to a particular frequency band, such as F2. That is, the switching unit 101 performs the frequency band switching before performing candidate beam identification. For example, the UE can locate an appropriate candidate beam more quickly in the particular frequency band to which it switches, so as to realize a fast beam failure recovery.

The frequency band described here refers to a certain frequency range, for example, and may be represented by a BWP. The BWP is used as an example of the frequency band in the following detailed description, but this is not restrictive.

It should be noted that the current downlink frequency band may also be kept in an active state after the downlink frequency band for the UE is switched to the particular frequency band, in a case that the UE supports simultaneous operation of multiple frequency bands.

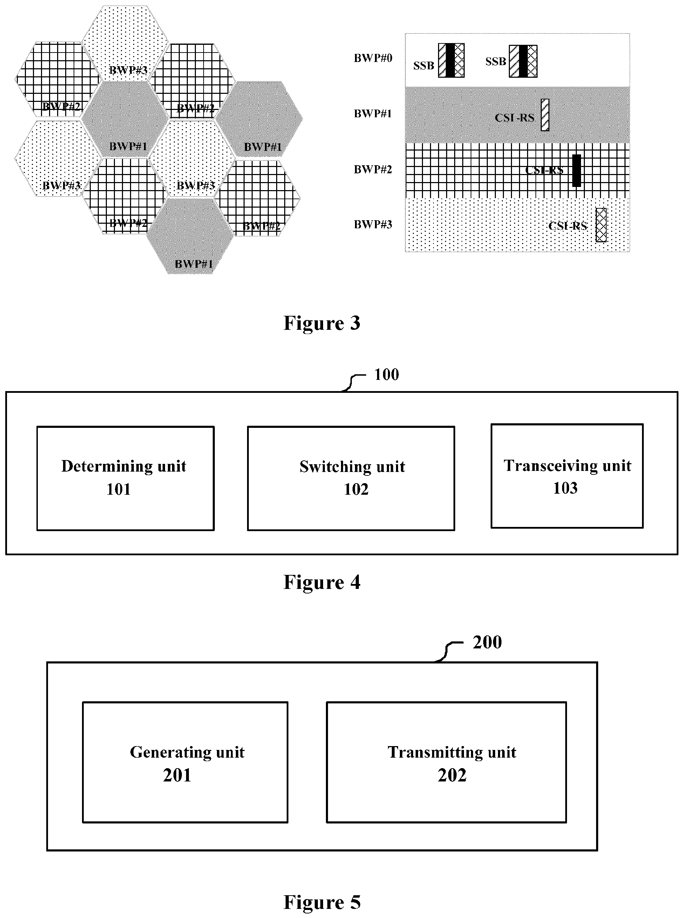

Taking an NTN as an example, each cell corresponds to multiple beams, and each BWP in each cell is bound to a corresponding beam. In other words, for each BWP other than an initially accessed BWP, only a particular beam is transmitted on the BWP, and all beams are transmitted on the initially accessed BWP, as shown in Figure 3. In an example shown in Figure 3, a frequency reuse factor FRF is equal to 3, BWP#0 is the initially accessed BWP, and different beams are represented as different patterns. It can be seen that, except for BWP#0, a beam represented by a square filled with diagonal lines is transmitted merely on BWP#1, a beam represented by a square filled with a solid color is transmitted only on BWP#2, and a beam represented by a square filled with diamonds is transmitted only on BWP#3. All beams are transmitted on the initially accessed BWP#0 for an SSB/SIB transmission. In addition, CSI-RS transmission may or may not be performed.

In such a case, there may be no suitable candidate beam for switching in the current BWP when a beam failure occurs. The switching unit 102 switches the UE to a particular BWP so as to improve a speed of beam failure recovery.

In addition, in a case of considering an antenna polarization direction to reduce co-frequency interferences between adjacent cells, the switching unit 102 may be further configured to switch the UE to a particular BWP and/or a particular antenna polarization direction when a beam failure occurs.

For example, the particular BWP may be one of the following: an initially accessed BWP; a BWP pre-configured by a base station; and a BWP randomly accessed by the UE last time.

Therefore, in a case that the particular BWP is the initially accessed BWP, the UE may select a candidate beam among all beams after switching to the initially accessed BWP, since all beams are transmitted on this BWP. For example, the particular BWP may be set by default as the initially accessed BWP.

In addition, the switching unit 102 may be configured to determine the particular BWP based on configuration information of a candidate beam set for BFR from the base station. The configuration information may be transmitted through RRC signaling, and includes, for example, an identifier of a corresponding BWP of a candidate beam. For example, in a case that an identifier of a BWP is not included in the configuration information, (for example, when the field of the identifier is null), it may be considered that the base station indicates to switch the UE to the initially accessed BWP or the BWP randomly accessed by the UE last time.

In an example, the switching unit 102 is further configured to trigger a switch timer to start timing when it is determined that a beam failure occurs. When the timing of the switch timer reaches a predetermined period of time, the downlink frequency band for the UE is switched to the particular frequency band. For example, the switching unit 102 may trigger the switch timer when a physical layer of the UE reports a beam failure indication to a higher layer (for example, the MAC layer). That is, the switch timer is triggered when a beam failure is detected by the physical layer of the UE.

The duration of the predetermined period of time may depend on a capability of the UE. Since the UE is performing the switching of BWP and cannot measure any new beam during the timing of the switch timer, the higher layer of the UE does not transmit any command of a new beam request to the physical layer of the UE. Exemplarily, in a case that the predetermined period of time is set to 5ms, the UE is to be switched to the particular frequency band 5ms after detecting the beam failure is detected. In addition, the duration of the predetermined period of time may also be set to 0.

After the UE is switched to the particular band, the determining unit 101 is further configured to determine a candidate beam for beam failure recovery in the particular frequency band.

For example, the determining unit 101 may be configured to perform a beam quality measurement on a beam in the particular frequency band for multiples times, and determine the candidate beam based on results of the beam quality measurements. For example, the determining unit 101 may determine a beam whose beam quality is gradually improved as a candidate beam.

In addition, in a case that the UE communicates with a base station located on a satellite through an NTN, the determining unit 101 may determine the candidate beam in conjunction with characteristics of satellite communications.

For example, since a movement of the satellite relative to the UE on the ground is regular, a beam quality of a beam emitted from the base station is predictable. The determining unit 101 may be configured to determine the candidate beam based on location information of the UE, and satellite ephemeris information and/or satellite beam location information.

Alternatively, the determining unit 101 may be configured to perform a beam quality measurement on a beam in the particular frequency band, and determine the candidate beam based on a result of the measurement and satellite ephemeris information and/or satellite beam location information. For example, the determining unit 101 may estimate a change trend of a beam on the basis of a current result of the beam quality measurement on the beam and in conjunction with the satellite ephemeris information and/or the satellite beam location information, and thereby determine a beam whose beam quality is to become better as a candidate beam, for example.

The determining unit 101 may determine the candidate beam based on a comparison between a result of the beam quality measurement and a predetermined threshold, where the predetermined threshold is lower than a threshold for cell handover decision in layer 3. In the cell handover decision in layer 3, a cell handover is decided only when the beam quality is higher than the threshold. In the NTN network, it is possible to predict whether the beam quality is to become better and better based on the satellite ephemeris information and/or the satellite beam location information. A requirement for the current beam quality may be relatively low, in a case that the beam quality is to become better and better. Therefore, the predetermined threshold for comparison can be set to be relatively lower.

After determining the candidate beam, the UE needs to transmit a BFRQ to the base station. Accordingly, the electronic apparatus 100 may further include a transceiving unit 103, as shown in Figure 4. The transceiving unit 103 is configured to transmit a determination result of the candidate beam to the base station through a BFRQ, and detect a BFRR from the base station.

For example, the transceiving unit 103 is configured to transmit the BFRQ through a physical random-access channel (PRACH).

In a case that an uplink BWP and a downlink BWP are bound to each other, for example, in a time division duplex (TDD) system, the switching unit 102 is further configured to switch the uplink BWP to the particular BWP too, and transmit the BFRQ using corresponding resources such as a random-access channel, MAC CEs in a newly activated uplink BWP.

In a case that the uplink BWP and the downlink BWP are not bound to each other, for example, in a frequency division duplex (FDD) system, the switching unit 102 is further configured to: determine whether a current uplink BWP contains available resources for transmission of the BFRQ; transmit the BFRQ using the available resources on the current uplink BWP, in a case of determining that the current uplink BWP contains the available resources; and switch the uplink BWP to an initial uplink BWP or a BWP containing the available resources to transmit the BFRQ, in a case of determining that the current uplink BWP does not contain the available resources.

The available resources may include, for example, one of the following: contention free random access (CFRA) resources associated with determined candidate beam; contention based random access (CBRA) resources; and resources for transmitting a link recovery request (LRR).

For example, in a case of FDD, when a current serving cell is a SpCell and the determining unit 101 locates an available candidate beam, the switching unit 102 determines whether the current uplink BWP contains CFRA resources associated with the candidate beam. In a case that the current uplink BWP contains the CFRA resources, no switching of an uplink BWP is performed, but a BFRQ is transmitted using the CFRA resources. In a case that the current uplink BWP does not contain the CFRA resources, the switching unit 102 switches the uplink BWP to an initial uplink BWP or a BWP containing the CFRA resources associated with the available candidate beam, to transmit the BFRQ. On the other hand, in a case that the determining unit 101 locates no available candidate beam in the above situation, the switching unit 102 determines whether the current uplink BWP contains available CBRA resources. In a case that the current uplink BWP contains the available CBRA resources, the switching unit 102 does not perform switching of the uplink BWP, but transmits the BFRQ using the CBRA resources. In a case that the current uplink BWP does not contain the available CBRA resources, the switching unit 102 switches the uplink BWP to the initial uplink BWP or a BWP containing the CBRA resources, to transmit the BFRQ.

As another example, in a case of FDD, if the current serving cell is a SCell, the switching unit 102 determines whether the current uplink BWP contains resources for transmitting an LRR. The switching unit 102 does not perform switching of an uplink BWP but transmits a BFRQ using the resources, in a case that the current uplink BWP contains the resources for transmitting an LRR. The switching unit 102 switches the uplink BWP to the initial uplink BWP or a BWP available for transmitting an LRR, to transmit the BFRQ, in a case that the current uplink BWP does not contain the resources for transmitting an LRR.

After transmitting the BFRQ, the transceiving unit 103 is further configured to detect a BFRR from the base station on particular time-frequency resources (such as recoverySearchSpace). Since it takes time for transmission and processing of signals, the UE may start a blind detection for the BFRR after waiting for a period of time since the BFRQ is transmitted, so as to reduce power consumption.

In a case that the UE communicates with a base station located on a satellite through an NTN, the transceiving unit 103 is configured to start to detect the BFRR after a predetermined period of time since transmitting the BFRQ. The predetermined period of time is determined at least partially based on a distance between the UE and the satellite. The predetermined period of time is longer than that for a terrestrial network, because the NTN network has a large delay due to an increase of a transmission distance. For example, assuming that the BFRQ is transmitted at a time slot n, then detection for the BFRR is started at time slot n+m in the terrestrial network, while the detection for the BFRR may be started at time slot n+m+K_offset in the NTN. The K_offset depends on a distance between the UE and the satellite (satellite beam), which, for example, may be corresponding to a time taken for a round trip transmission of a signal between the UE and the satellite.

Further, for transparent transmission, the predetermined period of time is determined further based on transmission time involved in a feeder link. In the transparent transmission, a base station on a satellite performs only reception and forwarding of a signal, and an actual processing is still performed by a base station on the ground. Therefore, a total delay further includes transmission time taken for a signal transmission in the feeder link between the satellite and the base station on the ground, resulting in a further increase of the delay. In order to reduce the power consumption, such transmission time is required to be taken into account when setting the timing for starting BFRR detection.

In addition, in order to ensure that the BFR is completed within certain time duration, a beamFailureRecoveryTimer is defined. The UE needs to receive the BFRR within a time length limited by the timer, so as to successfully complete the BFR. In an embodiment, the timer is improved based on characteristics of the NTN.

Specifically, in a case that the UE communicates with a base station on a satellite through an NTN, the switching unit 102 is configured to start a beam failure recovery timer when a beam failure is detected, and stop the beam failure recovery timer upon reception of the BFRR. A timing length of the beam failure recovery timer is determined at least partially based on a distance between the UE and the satellite. For example, compared with the ground network, the timing length may be extended by the time taken for a round trip transmission of a signal between the UE and the satellite.

Similarly, for the transparent transmission, the timing length is determined further based on transmission time involved in the feeder link.

In summary, the electronic apparatus 100 according to this embodiment can locate a candidate beam quickly by switching the UE to a particular downlink frequency band when a beam failure occurs, so as to achieve a rapid beam failure recovery.

### <Second embodiment>

Figure 5 shows a block diagram showing functional modules of an electronic apparatus 200 for wireless communications according to another embodiment of the present disclosure. As shown in Figure 5, the electronic apparatus 200 includes a generating unit 201 and a transmitting unit 202. The generating unit 201 is configured to generate configuration information of a candidate beam set for BFR, where the configuration information includes a field of an identifier (ID) of a frequency band where a candidate beam is located. The transmitting unit 202 is configured to transmit the configuration information to UE, where the UE switches to the frequency band indicated by the field upon detection of a beam failure.

The generating unit 201 and the transmitting unit 202 may be implemented by one or more processing circuits, which may be implemented as chips, for example. Furthermore, it should be understood that functional units in the apparatus shown in Figure 5 is only logical modules divided according to specific functions thereof, and are not intended to limit the specific implementation.

The electronic apparatus 200 may be disposed on a base station side or communicatively connected to a base station, for example. Here, it should be noted that the electronic apparatus 200 may be implemented at the chip-level, or may be implemented at an apparatus level. For example, the electronic apparatus 200 may serve as the base station itself, and may further include external apparatuses such as a memory and a transceiver (not shown). The memory may store programs required to be executed by the base station to realize various functions and relevant data information. The transceiver may include one or more communication interfaces to support communication with different apparatuses (such as UE, and other base stations). An implementation of the transceiver is not specifically limited here.

The generating unit 201 includes the identifier of the frequency band where the candidate beam is located in the configuration information of the candidate beam set, so that the UE can switch to the frequency band indicated by the corresponding field when detecting a beam failure, and thereby speeding up the beam failure recovery. The transmitting unit 202 may transmit the configuration information to the UE through RRC signaling, for example.

For example, the frequency band may be represented by a BWP. The field of the identifier, in a case of being null, indicates an initially accessed BWP or a BWP randomly accessed by the UE last time. As described in the first embodiment, in a case that the field of the identifier is null, it is indicated that the UE is to switch to a default BWP, which may be either the initially accessed BWP or the BWP randomly accessed by the UE last time.

In a case that the UE communicates with a base station located on a satellite through an NTN, the generating unit 201 is further configured to determine a predetermined threshold for selecting a candidate beam in the BFR. The predetermined threshold is transmitted by the transmitting unit 202 to the UE. The predetermined threshold is lower than a threshold for cell handover decision in layer 3.

In addition, in order to reduce power consumption of the UE, the generating unit 201 is further configured to determine, at least partially based on a distance between the UE and the satellite, a time interval between a time instant when the UE transmits a BFRQ and a time instant when the UE starts to detect a BFRR from the base station. The transmitting unit 202 transmits information of the time interval to the UE. For example, when determining the time interval, the generating unit 201 takes into account not only a time period required for normal transmission and processing of signals, but also a time period taken for a round-trip transmission of a signal between the UE and the satellite. In a case of transparent transmission, the generating unit 201 determines the time interval further based on transmission time involved in a feeder link.

Further, in order to ensure that the BFR is completed within a certain time period, the generating unit 201 is further configured to determine, at least partially based on a distance between the UE and the satellite, a timing length of a beam failure recovery timer. The transmitting unit 202 transmits information of the timing length to the UE. The beam failure recovery timer is started upon detection of a beam failure by the UE and stopped upon reception of a BFRR by the UE from the base station. For example, when determining the timing length, the generating unit 201 takes into account not only a time period required for determination of the candidate beams and normal transmission and processing of signals, but also a time period taken for a round-trip transmission of a signal between the UE and the satellite. In a case of transparent transmission, the generating unit 201 determines the timing length further based on transmission time involved in a feeder link.

Relevant details of the above aspects have been given in detail in the first embodiment, and are not repeated here.

In summary, the electronic apparatus 200 according to this embodiment provides UE with configuration information containing an identifier of a frequency band, so that the UE can switch to a particular downlink frequency band in case of beam failure occurring and locate a candidate beam quickly. Hence, a fast beam failure recovery is achieved.

### <Third embodiment>

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications.

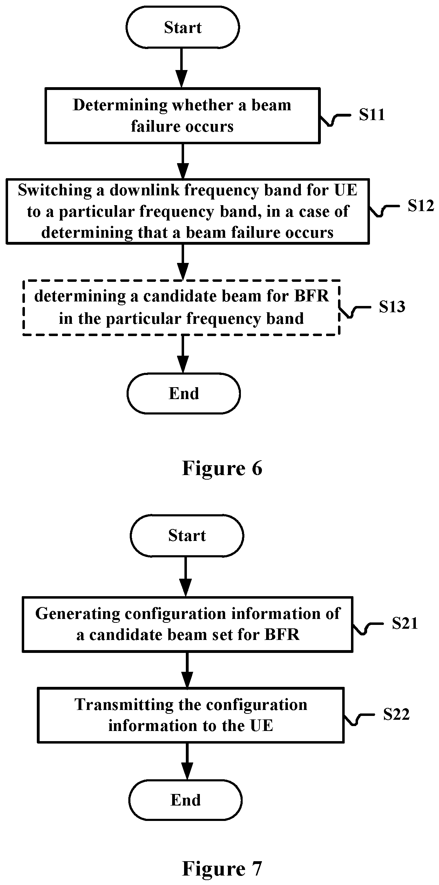

Figure 6 shows a flowchart of a method for wireless communications according to an embodiment of the present application. The method includes: determining whether a beam failure occurs (S11); and in a case of determining that a beam failure occurs, switching a downlink frequency band for UE from a current downlink frequency band to a particular frequency band (S12). The method may be performed on UE side, for example.

For example, the current downlink frequency band may still be kept in an active state while the downlink frequency band for the UE is switched to the particular frequency band.

Step S12 may further include: triggering a switch timer to start timing when determining that a beam failure occurs, and switching the downlink frequency band for the UE to the particular frequency band when the timing of the switch timer reaches a predetermined period of time. For example, the switch timer may be triggered when a physical layer of the UE reports a beam failure indication to a higher layer. During the timing of the switch timer, the higher layer of the UE does not transmit any command of a new beam request to the physical layer of the UE.

For example, the frequency band may be represented by a BWP, and the particular BWP may be one of the following: an initially accessed BWP; a BWP pre-configured by the base station; and a BWP randomly accessed by the UE last time. The particular BWP may be determined based on configuration information of a candidate beam set for beam failure recovery from the base station.

In a specific scenario, for example, for each BWP other than the initially accessed BWP, only a particular beam is transmitted on the BWP, and all beams are transmitted on the initially accessed BWP.

As shown by the dashed line block in Figure 6, the method may further include a step S13 of determining a candidate beam for beam failure recovery in the particular frequency band. By way of example, a beam quality measurement may be performed on a beam in the particular frequency band for multiple times, and the candidate beam can be determined based on results of the beam quality measurements. In a case that the UE communicates with a base station on a satellite through an NTN, the candidate beam may be determined based on location information of the UE, and satellite ephemeris information and/or satellite beam location information. Alternatively, a beam quality measurement may be performed on a beam in the particular frequency band, and the candidate beam may be determined based on a result of the measurement and the satellite ephemeris information and/or the satellite beam location information. The candidate beam may be determined based on a comparison between the result of the measurement and a predetermined threshold. The predetermined threshold is lower than a threshold for cell handover decision in layer 3.

Although not shown in the figure, the above method may further include: transmitting a determination result of the candidate beam to the base station through a BFRQ, and detecting a BFRR from the base station.

In a case that a downlink BWP and an uplink BWP are bound to each other, the uplink BWP may also be switched to the particular BWP, and the BFRQ may be transmitted using corresponding resources in a newly activated uplink BWP.

On the other hand, in a case that the downlink BWP and the uplink BWP are not bound to each other, it may be first determined whether a current uplink BWP contains available resources for transmission of the BFRQ. The BFRQ is transmitted using the available resources in the current uplink BWP, when determining that the current uplink BWP contains the available resources. The uplink BWP is switched to an initial uplink BWP or a BWP containing the available resources, to transmit the BFRQ, when determining that the current uplink BWP does not contain the available resources.

The available resources include, for example, one of the following: contention free random access resources associated with determined candidate beam; contention based random access resources; and resources for transmitting a link recovery request.

In addition, in a case that the UE communicates with a base station located on a satellite through an NTN, a detection of a BFRR is started after a predetermined period of time since transmitting the BFRQ. The predetermined period of time is determined at least partially based on a distance between the UE and the satellite. For transparent transmission, the predetermined period of time is determined further based on transmission time involved in a feeder link in the transparent transmission.

The UE starts a beam failure recovery timer upon detection of a beam failure, and stops the beam failure recovery timer upon reception of the BFRR. In a case that the UE communicates with a base station on a satellite through an NTN, a timing length of the beam failure recovery timer is determined at least partially based on a distance between the UE and the satellite. For transparent transmission, the timing length is determined further based on transmission time involved in a feeder link in the transparent transmission.

Figure 7 shows a flowchart of a method for wireless communications according to another embodiment of the present disclosure. The method includes: generating configuration information of a candidate beam set for BFR (S21), where the configuration information includes a field of an identifier of a frequency band where a candidate beam is located; and transmitting the configuration information to UE (S22), where the UE switches to the frequency band indicated by the field upon detection of a beam failure. The method may be performed on a base station side, for example.

For example, the frequency band may be represented by a BWP. The field of the identifier, in a case of being null, indicates an initially accessed BWP or a BWP randomly accessed by the UE last time.

In a case that the UE communicates with a base station located on a satellite through an NTN, the method further includes: determining a predetermined threshold for selecting a candidate beam in beam failure recovery and transmitting the predetermined threshold to the UE. The predetermined threshold is lower than a threshold for cell handover decision in layer 3.

In a case that the UE communicates with a base station on a satellite through an NTN, the method further includes: determining, at least partially based on a distance between the UE and the satellite, a time interval between a time instant when the UE transmits a BFRQ and a time instant when the UE starts to detect a BFRR from the base station; and transmitting information of the time interval to the UE. In a case of transparent transmission, the time interval is determined further based on transmission time involved in a feeder link in the transparent transmission.

In a case that the UE communicates with a base station on a satellite through an NTN, the method further includes: determining, at least partially based on a distance between the UE and the satellite, a timing length of a beam failure recovery timer; and transmitting information of the timing length to the UE. The beam failure recovery timer is started upon detection of a beam failure by the UE, and stopped upon reception of a BFRR by the UE from the base station. In a case of transparent transmission, the timing length is determined further based on transmission time involved in a feeder link in the transparent transmission.

The above-described methods correspond to the electronic apparatus 100 described in the first embodiment and the electronic apparatus 200 described in the second embodiment, respectively. Reference may be made to corresponding description above for specific details, and are not repeated here. Note that the methods may be used in combination or individually.

The technology of the present disclosure is applicable to various products.

For example, the electronic apparatus 100 may be implemented as various types of user equipment. The user equipment may be implemented as a mobile terminal (such as a smartphone, a tablet personal computer (PC), a notebook PC, a portable game terminal, a portable/dongle type mobile router, and a digital camera), or an in-vehicle terminal (such as a car navigation apparatus). The user equipment may also be implemented as a terminal (that is also referred to as a machine type communication (MTC) terminal) that performs machine-to-machine (M2M) communication. Furthermore, the user equipment may be a wireless communication module (such as an integrated circuit module including a single die) mounted on each of the terminals.

The electronic apparatus 200 may be implemented as various base stations. The base stations may be implemented as any type of evolved node B (eNB) or gNB (5G base station). The eNB includes a macro eNB and a small eNB, for example. The small eNB may be an eNB such as a pico eNB, a micro eNB and a home (femto) eNB that covers a cell smaller than a macro cell. The situation is similar to the gNB. Alternatively, the base station may also be implemented as a base station of any other type, such as a NodeB and a base transceiver station (BTS). The base station may include a main body (that is also referred to as a base station device) configured to control wireless communications, and one or more remote radio heads (RRH) arranged in a different place from the main body. In addition, various types of user equipment each may operate as the base station by performing functions of the base station temporarily or semi-permanently.

### [Application Examples Regarding a Base Station]

### (First Application Example)

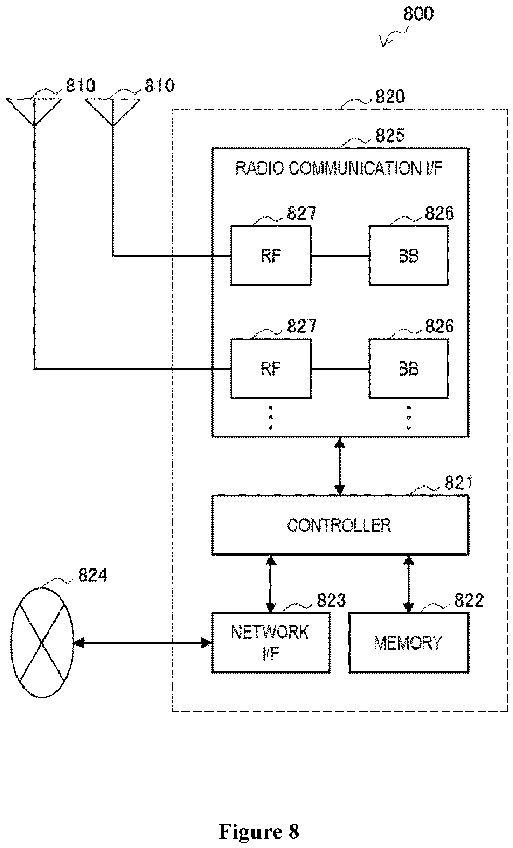

Figure 8 is a block diagram showing a first example of an exemplary configuration of an eNB or gNB to which the technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 8, the eNB 800 may include the multiple antennas 810. For example, the multiple antennas 810 may be compatible with multiple frequency bands used by the eNB 800. Although Figure 8 shows the example in which the eNB 800 includes the multiple antennas 810, the eNB 800 may include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as a terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. In a case that the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and perform various types of signal processing of layers (such as L1, Media Access Control (MAC), Radio Link Control (RLC), and a Packet Data Convergence Protocol (PDCP)). The BB processor 826 may have a part or all of the above-described logical functions, to replace the controller 821. The BB processor 826 may be a memory storing communication control programs, or a module including a processor and a related circuit configured to execute the programs. Updating the program may allow the functions of the BB processor 826 to be changed. The module may be a card or a blade inserted into a slot of the base station apparatus 820. Alternatively, the module may be a chip mounted on the card or the blade. Meanwhile, the RF circuit 827 may include, for example, a mixer, a filter, and an amplifier, and transmits and receives wireless signals via the antenna 810.

As shown in Figure 8, the radio communication interface 825 may include multiple BB processors 826. For example, the multiple BB processors 826 may be compatible with multiple frequency bands used by the eNB 800. The radio communication interface 825 may include multiple RF circuits 827, as shown in Figure 8. For example, the multiple RF circuits 827 may be compatible with multiple antenna elements. Although Figure 8 shows the example in which the radio communication interface 825 includes multiple BB processors 826 and multiple RF circuits 827, the radio communication interface 825 may include a single BB processor 826 and a single RF circuit 827.

In the eNB 800 shown in Figure 8, the transmitting unit 202 and the transceiver of the electronic apparatus 200 may be implemented by the radio communication interface 825. At least part of the functions may also be implemented by the controller 821. For example, the controller 821 may generate various kinds of configuration information and transmit the configuration information to the UE by performing functions of the generating unit 201 and the transmitting unit 202.

### (Second application example)

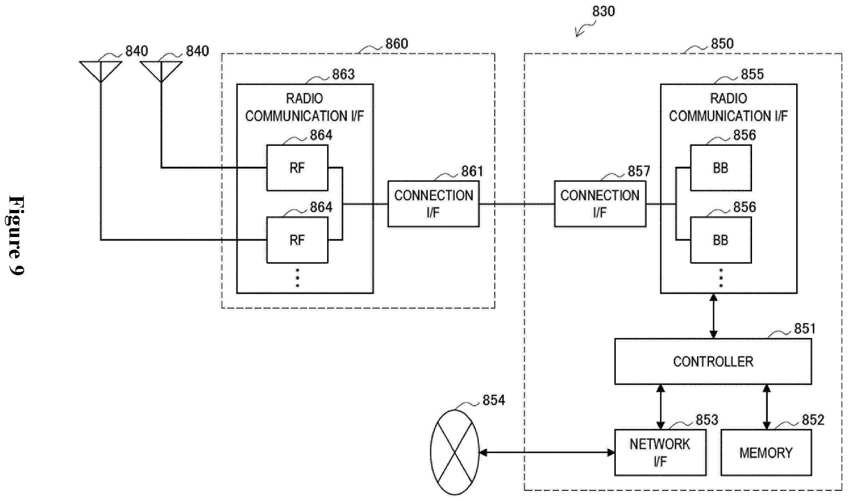

Figure 9 is a block diagram showing a second example of a schematic configuration of an eNB or gNB to which the technology of the present disclosure can be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 9, the eNB 830 may include multiple antennas 840. For example, the multiple antennas 840 may be compatible with multiple frequency bands used by the eNB 830. Although Figure 9 shows the example in which the eNB 830 includes multiple antennas 840, the eNB 830 may include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 8.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 8, except that the BB processor 856 is connected to an RF circuit 864 of the RRH 860 via the connection interface 857. As show in Figure 9, the radio communication interface 855 may include multiple BB processors 856. For example, the multiple BB processors 856 may be compatible with multiple frequency bands used by the eNB 830. Although Figure 9 shows the example in which the radio communication interface 855 includes multiple BB processors 856, the radio communication interface 855 may include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, an RF circuit 864. The RF circuit 864 may include, for example, a mixer, a filter and an amplifier, and transmits and receives wireless signals via the antenna 840. The radio communication interface 863 may include multiple RF circuits 864, as shown in Figure 9. For example, the multiple RF circuits 864 may support multiple antenna elements. Although Figure 9 shows the example in which the radio communication interface 863 includes multiple RF circuits 864, the radio communication interface 863 may include a single RF circuit 864.

In the eNB 830 shown in Figure 9, the transmitting unit 202 and the transceiver of the electronic apparatus 200 may be implemented by the radio communication interface 855 and/or the radio communication interface 863. At least part of the functions may also be implemented by the controller 851. For example, the controller 851 may generate various kinds of configuration information and transmit the configuration information to the UE by performing functions of the generating unit 201 and the transmitting unit 202.

### [Application Example Regarding User Equipment]

### (First Application Example)

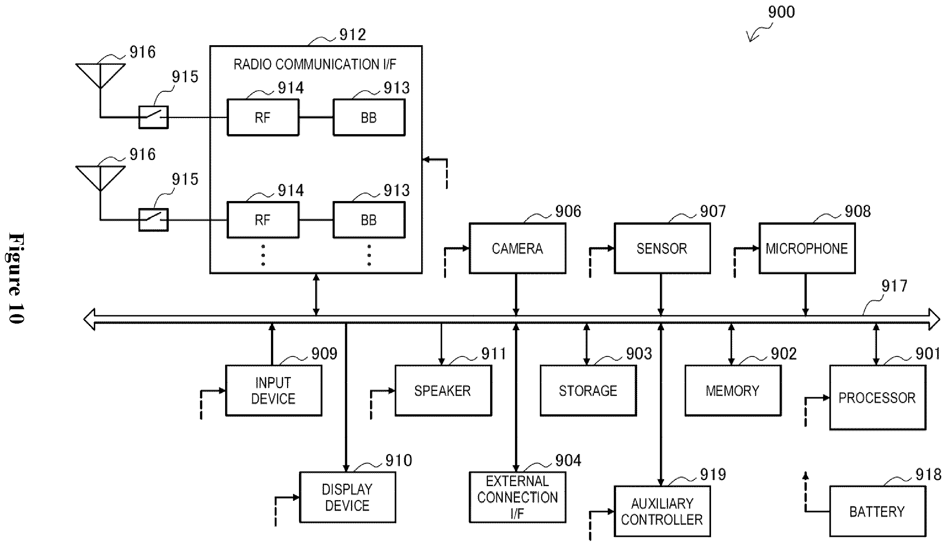

Figure 10 is a block diagram showing an exemplary configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals outputted from the smartphone 900 to sounds.

The radio communication interface 912 supports any cellular communication scheme (such as LTE and LTE-advanced), and performs wireless communications. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 10 shows a case that one RF link is connected to one antenna, which is only illustrative, and a situation where one RF link is connected to multiple antennas through multiple phase shifters is also possible. The radio communication interface 912 may be a chip module having the BB processor 913 and the RF circuit 914 integrated thereon. The radio communication interface 912 may include multiple BB processors 913 and multiple RF circuits 914, as shown in Figure 10. Although Figure 10 shows the example in which the radio communication interface 912 includes multiple BB processors 913 and multiple RF circuits 914, the radio communication interface 912 may include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 10. Although Figure 10 shows the example in which the smartphone 900 includes multiple antennas 916, the smartphone 900 may include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 shown in Figure 10 via feeder lines, which are partially shown as dashed lines in Figure 10. The auxiliary controller 919 operates a minimum necessary function of the smartphone 900, for example, in a sleep mode.

In the smartphone 900 shown in Figure 10, the transceiving unit 103, and the transceiver of the electronic apparatus 100 may be implemented by the radio communication interface 912. At least a part of the functions may also be implemented by the processor 901 or the auxiliary controller 919. For example, the processor 901 or the auxiliary controller 919 may implement switching of the downlink frequency band and a fast beam failure recovery by implementing the functions of the determining unit 101, the switching unit 102 and the transceiving unit 103.

### (Second Application Example)

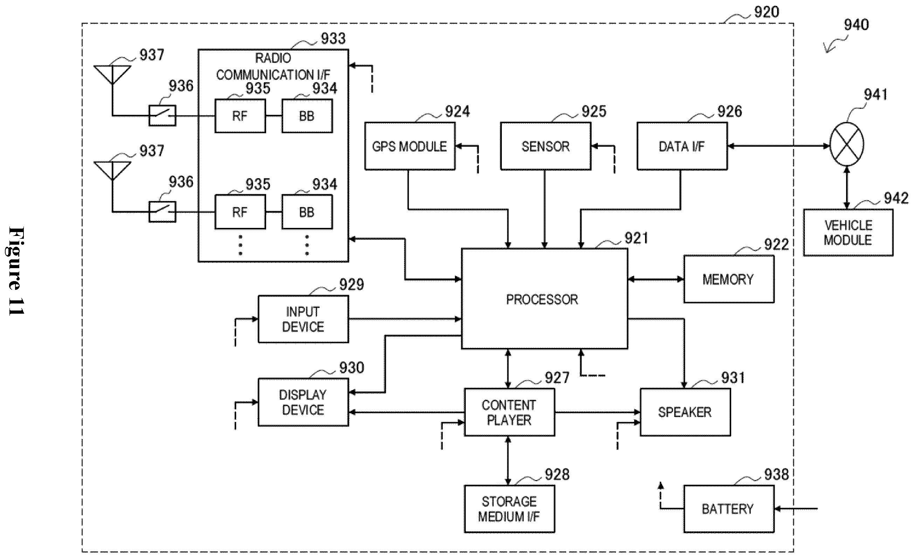

Figure 11 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or reproduced content. The speaker 931 outputs a sound for the navigation function or the reproduced content.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 11. Although Figure 11 shows the example in which the radio communication interface 933 includes multiple BB processors 934 and multiple RF circuits 935, the radio communication interface 933 may include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As shown in Figure 11, the car navigation apparatus 920 may include multiple antennas 937. Although Figure 11 shows the example in which the car navigation apparatus 920 includes multiple antennas 937, the car navigation apparatus 920 may include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 11 via feeder lines that are partially shown as dash lines in Figure 31. The battery 938 accumulates power supplied from the vehicle.

In the car navigation apparatus 920 shown in Figure 11, the transceiving unit 103 and the transceiver of the electronic apparatus 100 may be implemented by the radio communication interface 933. At least a part of the functions may also be implemented by the processor 921. For example, the processor 921 may implement switching of the downlink frequency band and a fast beam failure recovery by implementing the functions of the determining unit 101, the switching unit 102 and the transceiving unit 103.

The technology according to the present disclosure may also be implemented as an in-vehicle system (or a vehicle) 940 including one or more blocks of the car navigation apparatus 920, the in-vehicle network 941, and a vehicle module 942. The vehicle module 942 generates vehicle data (such as vehicle speed, engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

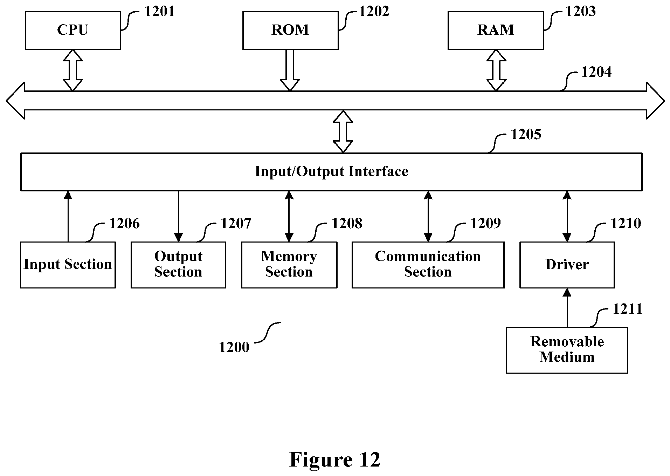

In the case where the present disclosure is realized with software or firmware, a program constituting the software is installed in a computer with a dedicated hardware structure (e.g. the general computer 1200 shown in Figure 12) from a storage medium or network, wherein the computer is capable of implementing various functions when installed with various programs.

In Figure 12, a central processing unit (CPU) 1201 executes various processing according to a program stored in a read-only memory (ROM) 1202 or a program loaded to a random access memory (RAM) 1203 from a memory section 1208. The data needed for the various processing of the CPU 1201 may be stored in the RAM 1203 as needed. The CPU 1201, the ROM 1202 and the RAM 1203 are linked with each other via a bus 1204. An input/output interface 1205 is also linked to the bus 1204.

The following components are linked to the input/output interface 1205: an input section 1206 (including keyboard, mouse and the like), an output section 1207 (including displays such as a cathode ray tube (CRT), a liquid crystal display (LCD), a loudspeaker and the like), a memory section 1208 (including hard disc and the like), and a communication section 1209 (including a network interface card such as a LAN card, modem and the like). The communication section 1209 performs communication processing via a network such as the Internet. A driver 1210 may also be linked to the input/output interface 1205, if needed. If needed, a removable medium 1211, for example, a magnetic disc, an optical disc, a magnetic optical disc, a semiconductor memory and the like, may be installed in the driver 1210, so that the computer program read therefrom is installed in the memory section 1208 as appropriate.

In the case where the foregoing series of processing is achieved through software, programs forming the software are installed from a network such as the Internet or a memory medium such as the removable medium 1211.

It should be appreciated by those skilled in the art that the memory medium is not limited to the removable medium 1211 shown in Figure 12, which has program stored therein and is distributed separately from the apparatus so as to provide the programs to users. The removable medium 1211 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1202 and the memory section 1208 in which programs are stored, and can be distributed to users along with the device in which they are incorporated.

To be further noted, in the apparatus, method and system according to the present disclosure, the respective components or steps can be decomposed and/or recombined. These decompositions and/or re-combinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
determine whether a beam failure occurs; and
in a case of determining that a beam failure occurs, switch a downlink frequency band for UE from a current downlink frequency band to a particular frequency band.

2. The electronic apparatus according to claim 1, wherein the frequency band is represented by a bandwidth part (BWP), and a particular BWP is one of the following: an initially accessed BWP; a BWP pre-configured by a base station; and a BWP randomly accessed by the UE last time.

3. The electronic apparatus according to claim 2, wherein the processing circuitry is configured to determine the particular BWP based on configuration information of a candidate beam set for beam failure recovery from the base station.

4. The electronic apparatus according to claim 2, wherein for each BWP other than the initially accessed BWP, only a particular beam is transmitted on the BWP; and all beams are transmitted on the initially accessed BWP.

5. The electronic apparatus according to claim 1, wherein while the downlink frequency band for the UE is switched to the particular frequency band, the current downlink frequency band still keeps in an active state.

6. The electronic apparatus according to claim 1, wherein the processing circuitry is further configured to trigger a switch timer to start timing when determining that the beam failure occurs, and when the timing of the switch timer reaches a predetermined period of time, the downlink frequency band for the UE is switched to the particular frequency band.

7. The electronic apparatus according to claim 6, wherein the processing circuitry is configured to trigger the switch timer when a physical layer of the UE reports a beam failure indication to a higher layer.

8. The electronic apparatus according to claim 6, wherein the higher layer of the UE does not transmit any command of a new beam request to the physical layer of the UE during the timing of the switch timer.

9. The electronic apparatus according to claim 1, wherein the processing circuitry is further configured to determine a candidate beam for beam failure recovery in the particular frequency band.

10. The electronic apparatus according to claim 9, wherein the processing circuitry is configured to perform a beam quality measurement for multiple times on a beam in the particular frequency band, and determine the candidate beam based on results of the beam quality measurements.

11. The electronic apparatus according to claim 9, wherein the UE communicates with a base station located on a satellite through a non-terrestrial network, and the processing circuitry is configured to determine the candidate beam based on location information of the UE, and satellite ephemeris information and/or satellite beam location information.

12. The electronic apparatus according to claim 9, wherein the UE communicates with a base station located on a satellite through a non-terrestrial network, and the processing circuitry is configured to perform a beam quality measurement on a beam in the particular frequency band, and determine the candidate beam based on a result of the measurement and satellite ephemeris information and/or satellite beam location information.

13. The electronic apparatus according to claim 9, wherein the UE communicates with a base station located on a satellite through a non-terrestrial network, and the processing circuitry is configured to perform a beam quality measurement on a beam in the particular frequency band, and determine the candidate beam based on a comparison between a result of the measurement and a predetermined threshold, wherein the predetermined threshold is lower than a threshold for cell handover decision in layer 3.

14. The electronic apparatus according to claim 2, wherein the processing circuitry is further configured to determine a candidate beam for beam failure recovery on the particular BWP, transmit a determination result to the base station through a beam failure recovery request, and detect a beam failure recovery response from the base station.

15. The electronic apparatus according to claim 14, wherein
in a case that a downlink BWP and an uplink BWP are bound to each other, the processing circuitry is further configured to switch the uplink BWP to the particular BWP, and transmit the beam failure recovery request using corresponding resources in a newly activated uplink BWP; and
in a case that the downlink BWP and the uplink BWP are not bound to each other, the processing circuitry is configured to
determine whether a current uplink BWP contains available resources for transmission of the beam failure recovery request,
transmit the beam failure recovery request using the available resources in the current uplink BWP, in a case of determining that the current uplink BWP contains the available resources, and
switch the uplink BWP to an initial uplink BWP or a BWP containing the available resources to transmit the beam failure recovery request, in a case of determining that the current uplink BWP does not contain the available resources.

16. The electronic apparatus according to claim 15, wherein the available resources comprises one of the following: contention free random access resources associated with the determined candidate beam; contention based random access resources; and resources for transmitting a link recovery request.

17. The electronic apparatus according to claim 14, wherein the UE communicates with a base station located on a satellite through a non-terrestrial network, and the processing circuitry is configured to start to detect the beam failure recovery response after a predetermined period of time since transmitting the beam failure recovery request, wherein the predetermined period of time is determined at least partially based on a distance between the UE and the satellite.

18. The electronic apparatus according to claim 17, wherein the predetermined period of time is determined further based on a transmission time involved in a feeder link in transparent transmission.

19. The electronic apparatus according to claim 14, wherein the UE communicates with a base station located on a satellite through a non-terrestrial network, and the processing circuitry is configured to start a beam failure recovery timer upon detection of a beam failure, and stop the beam failure recovery timer upon reception of the beam failure recovery response, wherein a timing length of the beam failure recovery timer is determined at least partially based on a distance between the UE and the satellite.

20. The electronic apparatus according to claim 19, wherein the timing length is determined further based on a transmission time involved in a feeder link in transparent transmission.

21. An electronic apparatus for wireless communications, comprising:
processing circuitry, configured to:
generate configuration information of a candidate beam set for beam failure recovery, wherein the configuration information comprises a field of an identifier of a frequency band where a candidate beam is located; and
transmit the configuration information to UE, wherein the UE switches to the frequency band indicated by the field upon detection of a beam failure.

22. The electronic apparatus according to claim 21, wherein the frequency band is represented by a bandwidth part (BWP), and the field, in a case of being null, indicates an initially accessed BWP or a BWP randomly accessed by the UE last time.

23. The electronic apparatus according to claim 21, wherein the UE communicates with a base station located on a satellite through a non-terrestrial network, and the processing circuitry is further configured to determine a predetermined threshold for selecting a candidate beam in beam failure recovery and transmit the predetermined threshold to the UE, wherein the predetermined threshold is lower than a threshold for cell handover decision in layer 3.

24. The electronic apparatus according to claim 21, wherein the UE communicates with a base station located on a satellite through a non-terrestrial network, and the processing circuitry is further configured to determine, at least partially based on a distance between the UE and the satellite, a time interval between a time instant when the UE transmits a beam failure recovery request and a time instant when the UE starts to detect a beam failure recovery response from the base station, and transmit information of the time interval to the UE.

25. The electronic apparatus according to claim 24, wherein the processing circuitry is further configured to determine the time interval based on transmission time involved in a feeder link in transparent transmission.

26. The electronic apparatus according to claim 21, wherein the UE communicates with a base station located on a satellite through a non-terrestrial network, and the processing circuitry is further configured to determine, at least partially based on a distance between the UE and the satellite, a timing length of a beam failure recovery timer and transmit information of the timing length to the UE,
wherein the beam failure recovery timer is started upon detection of a beam failure by the UE, and stopped upon reception of a beam failure recovery response by the UE from the base station.

27. The electronic apparatus according to claim 26, wherein the processing circuitry is further configured to determine the timing length based on transmission time involved in a feeder link in transparent transmission.

28. A method for wireless communications, comprising:
determining whether a beam failure occurs; and
in a case of determining that a beam failure occurs, switching a downlink frequency band for UE from a current downlink frequency band to a particular frequency band.

29. A method for wireless communications, comprising:
generating configuration information of a candidate beam set for beam failure recovery, wherein the configuration information comprises a field of an identifier of a frequency band where a candidate beam is located; and
transmitting the configuration information to UE, wherein the UE switches to the frequency band indicated by the field upon detection of a beam failure.

30. A computer-readable storage medium storing computer-executable instructions, which when executed, cause the method for wireless communications according to claim 28 or 29 to be performed.
